# EUROPÄISCHE PATENTSCHRIFT

(11) **EP 3 693 984 B1**
(45) Veröffentlichungstag und Bekanntmachung des Hinweises auf die Patenterteilung: **03.08.2022**
(21) Anmeldenummer: 19156483.0
(22) Anmeldetag: 11.02.2019
(51) Int. Cl.: H01H 3/02, F16P 3/08

(54) **SICHERHEITSSCHALTERANORDNUNG**
SAFETY SWITCH ASSEMBLY
ENSEMBLE COMMUTATEUR DE SÉCURITÉ

(43) Veröffentlichungstag der Anmeldung: 12.08.2020
(73) Patentinhaber: EUCHNER GmbH + Co. KG, 70771 Leinfelden-Echterdingen (DE)
(72) Erfinder: Grimm, Ilo, 71111 Waldenbuch (DE); Gehrke, Mike, 73269 Hochdorf (DE)
(74) Vertreter: Ruckh, Rainer Gerhard

(56) Entgegenhaltungen:
- EP-A2- 1 440 930
- EP-A2- 1 795 676
- DE-A1- 10 360 251
- DE-A1-102008 060 004

## Beschreibung

Eine derartige Sicherheitsschalteranordnung umfasst allgemein einen Sicherheitsschalter mit einem zugeordneten Betätiger. Die Sicherheitsschalteranordnung wird allgemein im Bereich der Sicherheitstechnik, das heißt im Bereich der Maschinensicherheit, eingesetzt. Für den Einsatz im Bereich der Sicherheitstechnik, insbesondere im Bereich des Personenschutzes, ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer beweglichen trennenden Schutzeinrichtung, wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelungsstellung des Betätigers wird dadurch kontrolliert, dass mit einem RFID-Lesegerät im Sicherheitsschalter ein Transponder im Betätiger erkannt wird. Zusätzlich kann eine Zuhaltung vorgesehen sein, mittels derer der Betätiger in seiner Verriegelungsstellung zugehalten ist.

Eine derartige Sicherheitsschalteranordnung ist beispielsweise aus der EP 17202141 bekannt.

Die EP 1 795 676 A2 betrifft einen Sicherheitsschalter zum Erzeugen eines Freigabesignals in Abhängigkeit von der Position einer beweglichen Schutztür. Der Sicherheitsschalter beinhaltet ein Türteil und ein Rahmenteil. Das Türteil weist einen Betätiger auf, der zwischen einer ersten und einer zweiten Position verstellbar ist. Das Rahmenteil besitzt eine Ausnehmung, in die der Betätiger in der zweiten Position eingreifen kann. Ferner ist ein Sperrglied vorgesehen, um den Betätiger in der zweiten Position zu blockieren. Außerdem ist ein Sensor vorhanden, der dazu ausgebildet ist, zumindest eine der Positionen des Betätigers eindeutig zu detektieren, um in Abhängigkeit davon das Freigabesignal zu erzeugen. Weiterhin ist eine Notentriegelung mit einem Handrad vorgesehen.

Die DE 10 2008 060 004 A1 betrifft einen Sicherheitsschalter zum Erzeugen eines Anlagefreigabesignals in Abhängigkeit von der Position einer beweglichen Schutztür, mit der ein Gefahrenbereich einer Anlage zugangsgesichert wird, wobei bei Vorliegen des Anlagefreigabesignals zumindest ein in dem Gefahrenbereich liegender Teil der Anlage betrieben werden kann. Dem Sicherheitsschalter ist ein Betätiger zugeordnet, der mittels eine Sperrglieds blockiert werden kann. Die Blockierung kann durch ein Entriegelungselement aufgehoben werden.

Die DE 103 60 251 A1 betrifft eine Elektrowerkzeugmaschine mit einer geräteseitig entfernbaren Versorgungseinheit zur Versorgung einer Antriebsmaschine mit Energie mit einem zumindest mittelbar betätigbaren Schalter zum Einschalten und Ausschalten der Antriebsmaschine. Eine Entriegelungseinheit dient zur Führung des Schalters in eine Ausschaltposition beim Ankoppeln der Versorgungseinheit, im Falle eines beim Entkoppeln der Versorgungseinheit in einer Ein-Position arretierten Schaltmittels zum Betätigen des Schalters.

Der Erfindung liegt die Aufgabe zugrunde eine Sicherheitsschalteranordnung der eingangs genannten Art bereitzustellen, welche bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sicherheitsschalteranordnung mit einem Sicherheitsschalter und einem diesem zugeordneten Betätiger. Weiterhin ist, insbesondere im Sicherheitsschalter, eine Zuhalteeinheit vorgesehen, mittels derer der Betätiger in einer Verriegelungsstellung zugehalten ist. Der Sicherheitsschalter weist eine Hilfsentriegelungseinheit auf, welche ein mechanisch betätigbares Betätigungselement aufweist. Eine Betätigung des Betätigungselements ist nur mit einem Übertragungselement in eine Stellbewegung für die Zuhalteeinheit umgesetzt. Ein Segment des Übertragungselements bildet eine Schubstange aus. Ein Segment des Übertragungselements bildet ein Filmscharnier aus, welches auf einer Welle des Betätigungselements auf- oder abgewickelt werden kann.

Die erfindungsgemäße Sicherheitsschalteranordnung wird im Bereich der Sicherheitstechnik, das heißt im Bereich der Maschinensicherheit eingesetzt.

Generell wird mit der Sicherheitsschalteranordnung eine Sicherheitsfunktion für eine zu sichernde Anlage oder Maschine bereitgestellt. Insbesondere dient die Sicherheitsschalteranordnung zur Sicherung des Zugangs zu einem Gefahrenbereich. Die Sicherheitsschalteranordnung dient dann zur Überwachung einer Verriegelung einer beweglichen trennenden Schutzeinrichtung, wie zum Beispiel einer Schutztür, als Zugang zu dem Gefahrenbereich.

In diesem Fall wird der Betrieb einer gefahrbringenden Anlage nur dann freigegeben, wenn die bewegliche trennende Schutzeinrichtung verriegelt ist, was dann der Fall ist, wenn sich ein an der beweglichen trennenden Schutzeinrichtung angeordneter Betätiger in einer Verriegelungsstellung am Sicherheitsschalter, der stationär, zum Beispiel an einem Rahmenteil für die bewegliche trennende Schutzeinrichtung, angeordnet ist, befindet.

Vorteilhaft ist die Verriegelungsstellung des Betätigers dadurch überwacht, dass Signale eines Transponders im Betätiger in einer Leseeinheit des Sicherheitsschalters erfasst werden.

Weiterhin ist eine Zuhalteeinheit vorgesehen, welche eine Zuhaltung derart bewirkt, dass der Betätiger in der Verriegelungsstellung gehalten ist. Hierzu hält die Zuhalteeinheit vorteilhaft ein Sperrelement in seiner Verriegelungsposition, so dass sich der Betätiger nicht mehr aus seiner Verriegelungsstellung herausbewegen kann. Dann wird mit dem Sicherheitsschalter der Betrieb der Anlage nur dann freigegeben, wenn der Betätiger durch die Zuhalteeinheit in der Verriegelungsstellung zugehalten wird. Die Zuhalteeinheit ist vorteilhaft Bestandteil des Sicherheitsschalters, das heißt sie ist in diesen integriert.

Der Sicherheitsschalter, insbesondere dessen Mittel zur Überwachung der Verriegelungsstellung des Betätigers und die Zuhalteeinheit, bilden elektrisch arbeitende Einheiten. Bei einem Stromausfall sind diese nicht mehr funktionsfähig.

In diesem Fall kann dann die Verriegelung des Betätigers mit diesen Einheiten nicht mehr gelöst werden. Dies führt insbesondere dazu, dass die bewegliche trennende Schutzeinrichtung nicht mehr geöffnet werden kann, so dass kein Zugang zum Gefahrenbereich mehr möglich ist.

Für derartige Fälle ist erfindungsgemäß eine mechanisch betätigbare Hilfsentriegelungseinheit vorgesehen. Eine Bedienperson kann durch ein manuelles Betätigen der Hilfsentriegelungseinheit den Betätiger aus der Verriegelungsstellung lösen und auch die mit der Zuhalteeinheit bewirkte Zuhaltung deaktivieren, so dass dann die bewegliche trennende Schutzeinrichtung geöffnet werden kann.

Die Hilfsentriegelungseinheit kann vorteilhaft als Fluchtentriegelungseinheit oder Notentsperrungseinheit ausgebildet sein. Wenn mit dem Sicherheitsschalter die Zuhaltung einer beweglichen trennenden Schutzeinrichtung als Zugang zu einem Gefahrenbereich überwacht wird, kann bei Ausbildung der Hilfsentriegelungseinheit als Fluchtentriegelungseinheit ein Benutzer, der im Gefahrenbereich eingesperrt ist, die bewegliche trennende Schutzeinrichtung manuell entsperren und aus dem Gefahrenbereich gelangen. Mit einer als Notentsperrungseinheit ausgebildeten Hilfsentriegelungseinheit kann ein Benutzer von außen, also außerhalb des Gefahrenbereichs die bewegliche trennende Schutzeinrichtung manuell entsperren.

Vorteilhaft ist die Hilfsentriegelungseinheit derart ausgebildet, dass ein mechanisch betätigbares Betätigungselement nur über ein Übertragungselement an das die Verriegelung des Betätigers bewirkende Sperrelement gekoppelt ist und zwar derart, dass eine Betätigung des Betätigungselements in eine vorzugsweise lineare Stellbewegung des Übertragungselements umgesetzt wird, die auf das Sperrelement übertragen wird, wodurch das Sperrelement den Betätiger freigibt, so dass dieser aus der Verriegelungsstellung manuell gelöst werden kann. Wesentlich hierbei ist, dass mit dem Übertragungselement eine Umsetzung von verschiedenartigen Bewegungen des Betätigungselements einerseits und des Sperrelements andererseits erfolgen kann.

Ein wesentlicher Vorteil der Erfindung besteht darin, dass durch das Übertragungselement die Position des Betätigungselements von der Position des Sperrelements entkoppelt ist.

Durch eine geeignete Dimensionierung und Führen des Übertragungselements innerhalb des Sicherheitsschalters kann die Position des Betätigungselements frei und unabhängig von der Position des Sperrelements gewählt werden. Das Betätigungselement kann somit an einer für eine Bedienperson vorteilhaften, gut zugänglichen Position am Sicherheitsschalter angeordnet werden, wobei das Betätigungselement hierbei räumlich getrennt zum Sperrelement angeordnet sein kann.

Ein weiterer Vorteil besteht in einem geringen konstruktiven Aufwand für die Hilfsentriegelungseinheit, da zur Ankopplung des Betätigungselements an die Zuhalteeinheit oder besonders vorteilhaft an das Sperrelement nur ein Übertragungselement erforderlich ist. Die Anzahl der Bauteile zur Realisierung der Hilfsentriegelungseinheit kann somit gering gehalten werden.

Besonders vorteilhaft ist das Übertragungselement ein Kunststoff-Spritzgussteil.

Das Übertragungselement kann damit rationell und kostengünstig hergestellt werden. Weiterhin ist eine flexible Formgebung des Übertragungselements möglich.

Dieses Kunststoff-Spritzgussteil oder allgemein das Übertragungselement kann verschiedene Segmente aufweisen, die unterschiedliche Funktionen aufweisen, so dass dieses Übertragungselement eine hohe Funktionalität aufweist.

Erfahrungsgemäß bildet ein Segment des Übertragungselements eine Schubstange aus.

Die Schubstange bildet eine schubsteife Einheit, mit der vorzugsweise lineare Stellbewegungen auf das Stellelement übertragen werden können, so dass dadurch das Stellelement aus einer Verriegelungsposition gelöst werden kann, wodurch der Betätiger aus seiner Verriegelungsstellung gelöst werden kann.

Erfindungsgemäß bildet weiterhin ein Segment des Übertragungselements ein Filmscharnier aus, welches auf einer Welle des Betätigungselements auf- oder abgewickelt werden kann.

Dadurch, dass bei Betätigen des Betätigungselements das Filmscharnier auf dieser auf- und abgewickelt werden kann, kann das Betätigungselement durch die Ausbildung in Form der Welle einen kompakten, platzsparenden Aufbau aufweisen. Insbesondere muss für das Betätigungselement kein zusätzlicher Raum zur Durchführung von linearen Stellbewegungen vorgesehen werden.

Die Ankopplung des Übertragungselements mit dem Filmscharnier an das Betätigungselement bildet somit eine konstruktiv einfache und platzsparende Bauform aus.

Damit Schubkräfte auf die Schubstange bei Abwickeln des Filmscharniers übertragen werden können, weist das Filmscharnier selbst eine hinreichende Schubsteifigkeit auf.

Besonders vorteilhaft liegt eine Stirnseite der Welle am Sicherheitsschalter frei und weist eine Schnittstelle zum Eingriff eines Werkzeugs auf, mittels dessen die Welle um ihre Längsachse drehbar ist.

Im einfachsten Fall besteht die Schnittstelle aus einem Schlitz, in welchen ein Schraubendreher eingeführt werden kann, um so die Welle zu drehen und das Filmscharnier auf- oder abzuwickeln.

Allgemein wird durch ein Aufwickeln oder Abwickeln des Filmscharniers auf der Welle eine Linearbewegung der Schubstange generiert, die auf die Zuhalteeinheit übertragen wird.

Je nach Ausbildung der Zuhalteeinheit kann diese aus ihrer Verriegelungs- und Zuhalteposition gelöst werden, indem mit dem Übertragungselement Zugkräfte bei Aufwickeln des Filmscharniers oder Schubkräfte bei Abwickeln des Filmscharniers auf die Zuhalteeinheit ausgeübt werden.

Gemäß einer vorteilhaften Weiterbildung ist ein Segment des Übertragungselements ein Federelement.

Dieses Federelement bildet einen Überlastschutz derart, dass zu große Spannungskräfte auf die Schubstange vermieden werden. Dadurch werden Fehlfunktionen oder Beschädigen der Hilfsentriegelungseinheit vermieden.

Gemäß einer weiteren vorteilhaften Weiterbildung ist ein Segment des Übertragungselements ein Rastelement. Dabei ist in einer Endlage der Schubstange des Übertragungselements das Rastelement in einer Rastaufnahme des Sicherheitsschalters eingerastet.

Das Einrasten des Rastelements in die Rastaufnahme gibt einer das Betätigungselement betätigenden Bedienperson eine haptische Rückmeldung, wann die Endlage der Schaubstange erreicht ist. Damit werden ein Überdrehen des Betätigungselements und dadurch bedingte Beschädigungen der Hilfsentriegelungseinheit auf einfache Weise vermieden.

Die Erfindung wird im Folgenden anhand der Zeichnungen erläutert. Es zeigen:
- Figur 1:: Erstes Beispiel mit einem Sicherheitsschalter und einem Betätiger, wobei der Betätiger in einer Verriegelungsstellung zugehalten ist.
- Figur 2:: Anordnung gemäß Figur 1, bei welcher die Zuhaltung des Betätigers mittels einer Hilfsentriegelungseinheit aufgehoben ist.
- Figur 3:: Zweites Beispiel mit einem Sicherheitsschalter und einem Betätiger, wobei der Betätiger in einer Verriegelungsstellung zugehalten ist.
- Figur 4:: Anordnung gemäß Figur 3, bei welcher die Zuhaltung des Betätigers mittels einer Hilfsentriegelungseinheit aufgehoben ist.

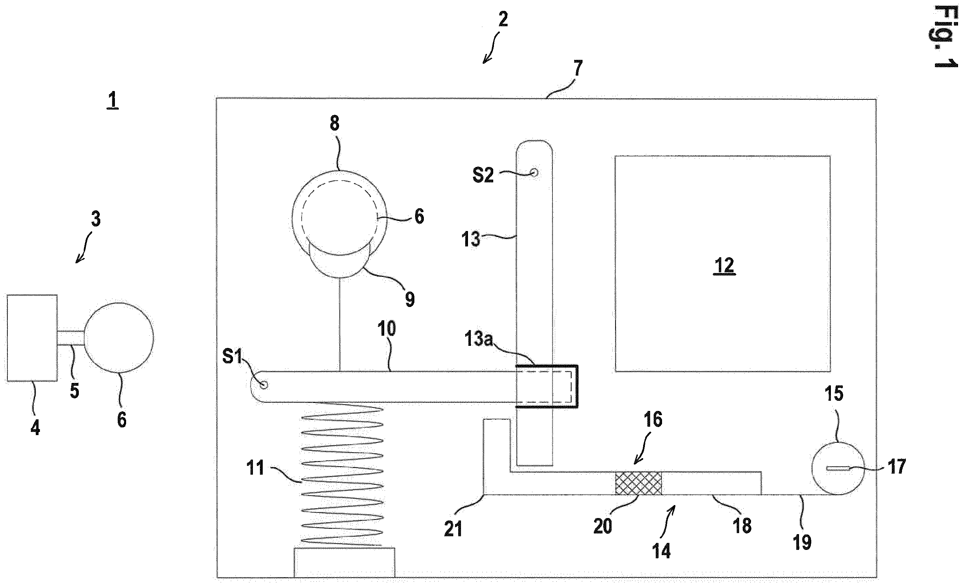

Figur 1 zeigt schematisch ein Ausführungsbeispiel einer Sicherheitsschalteranordnung 1 mit einem Sicherheitsschalter 2 und einem Betätiger 3.

Mit dieser Sicherheitsschalteranordnung 1 erfolgt beispielsweise die Sicherung einer Schutztür als Zugang zu einem Gefahrenbereich. Der Betätiger 3 kann an der Schutztür angeordnet sein, der Sicherheitsschalter 2 kann an einen die Türöffnung, die mit der Schutztür verschlossen wird, begrenzenden Rahmen angeordnet werden.

Wie aus Figur 1 ersichtlich, weist der Betätiger 3 einen Grundkörper 4 auf, in welchem ein Verbindungselement 5 gelagert ist. Das Verbindungselement 5 ist von einem langgestreckten Körper gebildet, dessen Querschnitt über seine gesamte Länge zumindest näherungsweise konstant ist.

Am Verbindungselement 5 ist ein Betätigerkopf 6 gelagert. Der Betätigerkopf 6 ist im vorliegenden Fall kugelförmig ausgebildet, was jedoch nicht zwingend ist. Der Betätigerkopf 6 weist eine größere Querschnittsfläche als das Verbindungselement 5 auf.

Die Komponenten des Sicherheitsschalters 2 sind in einem Gehäuse 7 integriert.

An einer Seitenwand des Gehäuses 7 des Sicherheitsschalters 2 ist eine Öffnung 8 vorgesehen, an welcher ein Hohlraum im Sicherheitsschalter 2 ausmündet, in welchen der Betätigerkopf 6 eingeführt werden kann, so dass sich dann der Betätiger 3 in seiner Verriegelungsstellung befindet.

Zur Erfassung der Verriegelungsstellung ist im Betätigerkopf 6 ein nicht dargestellter Transponder vorgesehen. Befindet sich der Betätigerkopf 6 in der Verriegelungsstellung, können im Transponder gespeicherte Signale mittels einer im Sicherheitsschalter integrierten Leseeinheit ausgelesen werden, wodurch die Verriegelungsstellung detektiert wird.

Die Öffnung 8 ist kreisförmig ausgebildet, wobei deren Durchmesser etwas größer ist als der Durchmesser des Betätigerkopfes 6.

Der Öffnung 8 ist ein Sperrelement 9 zugeordnet, das auf einer Wippe 10 gelagert ist, die um eine Schwenkachse S1 geschwenkt werden kann.

Figur 1 zeigt das Sperrelement 9 in seiner Verriegelungsposition, in welcher dieses in die Öffnung 8 ragt. Bei Einführen des Betätigerkopfes 6 in die Öffnung 8 wird das Sperrelement 9 nach unten gedrückt und damit die Wippe 10 gegen die Federkraft einer Feder 11 nach unten gedrückt.

Sobald der Betätiger 3 in den Hohlraum eingefahren ist, wird die Wippe 10 durch die Feder 11 wieder nach oben gedrückt, so dass das Sperrelement 9 wieder in die Verriegelungsposition überführt ist, in welcher das Sperrelement 9 in die Öffnung 8 ragt.

Der Sicherheitsschalter 2 weist eine Zuhalteeinheit auf, mittels derer eine Zuhaltung des Sperrelements 9 in der Verriegelungsposition bewirkt werden kann, wodurch der Betätiger 3 in seiner Verriegelungsstellung verriegelt ist.

Die Zuhalteeinheit besteht im vorliegenden Fall aus einem Klappankermagneten 12 und einem Anker in Form eines Schwenkhebels 13, der um eine Schwenkachse S2 schwenkbar ist.

Mit der Zuhalteeinheit wird eine Zuhaltung des Betätigers 3 in der Verriegelungsstellung dadurch bewirkt, dass der Klappankermagnet 12 ein Magnetfeld generiert, das den Schwenkhebel 13 in der in Figur 1 dargestellten Sperrposition hält, in welcher das freie Ende der Wippe 10 in eine Ausnehmung 13a des Schwenkhebels 13 greift, so dass das Sperrelement 9 in seiner Verriegelungsposition festgehalten ist.

Mit der Sicherheitsschalteranordnung 1 wird insbesondere eine im Gefahrenbereich angeordnete Anlage gesteuert. Dabei erzeugt der Sicherheitsschalter 2 nur dann ein Freigabesignal für die Freigabe des Betriebs der Anlage, wenn der Betätiger 3 in seiner Verriegelungsstellung detektiert wird, und wenn mit der Zuhalteeinheit eine Zuhaltung des Betätigers 3 in der Verriegelungsstellung bewirkt wird.

Erfindungsgemäß weist der Sicherheitsschalter 2 eine Hilfsentriegelungseinheit 14 auf. Mit der Hilfsentriegelungseinheit 14 kann, beispielsweise bei einem Stromausfall, die Zuhaltung des Betätigers 3 aufgehoben werden, so dass der Betätiger 3 aus seiner Verriegelungsstellung gelöst werden kann.

Die Hilfsentriegelungseinheit 14 weist ein Betätigungselement 15 und ein Übertragungselement 16, das das Betätigungselement 15 an das Sperrelement 9 ankoppelt, auf. Das Betätigungselement 15 besteht im Wesentlichen aus einer zylindrischen Welle, die mit einer Stirnseite drehbar im Gehäuse 7 gelagert ist. Die zweite Stirnseite liegt an einer Wand des Gehäuses 7 frei. In diese Stirnseite ist ein Schlitz 17 eingearbeitet, in welchen ein Schraubendreher eingeführt werden kann, um die Welle um ihre Längsachse zu drehen.

Das Übertragungselement 16 besteht aus einem Kunststoff-Spritzgussteil und weist mehrere Segmente auf, die unterschiedliche Funktionalitäten aufweisen. Ein erstes Segment bildet eine Schubstange 18 als schubsteifes Element zur Übertragung von linearen Stellbewegungen, die insbesondere zum Lösen des Sperrelements 9 aus der Verriegelungsstellung dienen. Weiterhin weist das Übertragungselement 16 ein Filmscharnier 19 auf, das an der Welle auf- und abgewickelt werden kann. Das Filmscharnier 19 selbst weist auch eine Schubsteifigkeit auf, so dass mit diesem Schutzbewegungen auf die Schubstange 18 übertragen werden können.

Als Schutz gegen eine mechanische Überlast weist das Übertragungselement 16 als weiteres Segment ein Federelement 20 auf.

Schließlich bildet ein nicht dargestelltes Segment des Übertragungselements 16 ein Rastelement aus, das in einer Endlage der Schubstange 18 des Übertragungselements 16 in einer Rastaufhahme des Sicherheitsschalters 2 eingerastet ist.

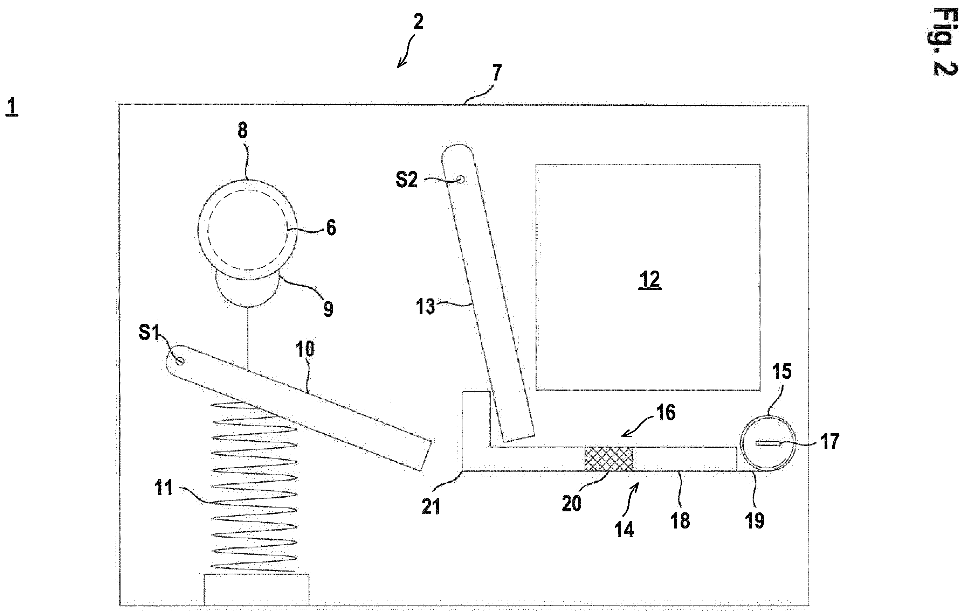

Durch das Einrasten des Rastelements in der Rastaufnahme, erhält die Bedienperson, die das Betätigungselement 15 betätigt, eine haptische Rückmeldung, wenn sich die Schubstange 18 in der in Figur 2 dargestellten Endlage befindet.

Das freie Ende des Übertragungselements 16 bildet einen Haken 21 aus, der am freien Ende des Schwenkhebels 13 der Zuhalteeinheit anliegt. Bei nicht betätigter Hilfsentriegelungseinheit 14, das heißt bei an der Welle abgewickeltem Filmscharnier 19, liegt der Haken 21 des Übertragungselements 16 ohne nennenswerte Anpresskraft am Schwenkhebel 13, so dass dieser in seiner in Figur 1 dargestellten Sperrposition verbleibt, in der der Schwenkhebel 13 die Zuhaltung des Sperrelements 9 bewirkt.

Die Hilfsentriegelung des Sperrelements 9 erfolgt dadurch, dass eine Bedienperson das Betätigungselement 15 betätigt, das heißt mit einem Schraubendreher die Welle so dreht, dass das Filmscharnier 19 an der Welle aufgewickelt wird, so dass das Übertragungselement 16 den Schwenkhebel 13 aus seiner Sperrstellung herauszieht (Figur 2). Damit liegt die Wippe 10 frei und der Betätigerkopf 6 kann aus dem Hohlraum des Sicherheitsschalters 2 herausgezogen werden, wobei hierbei wieder das Sperrelement 9 gegen die Federkraft nach unten gedrückt wird.

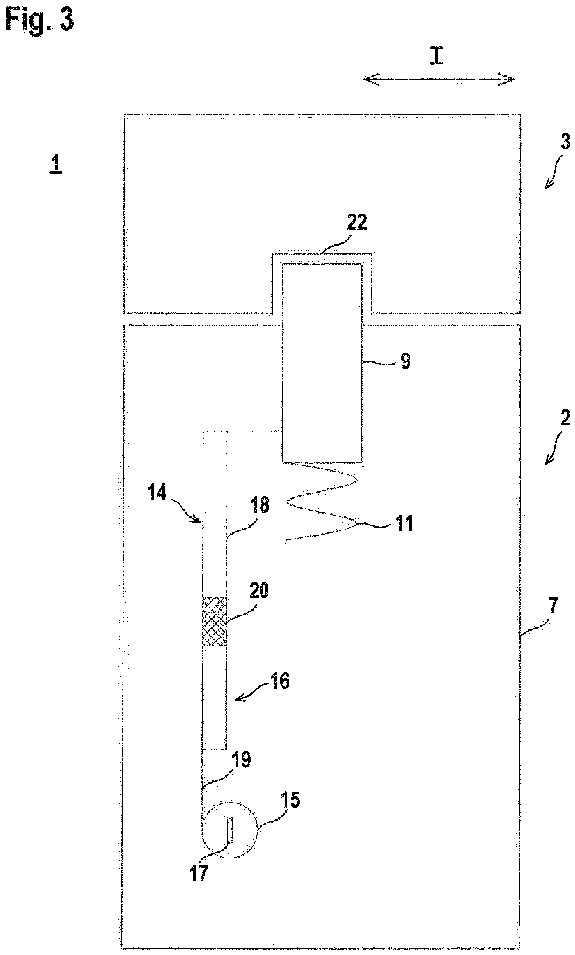

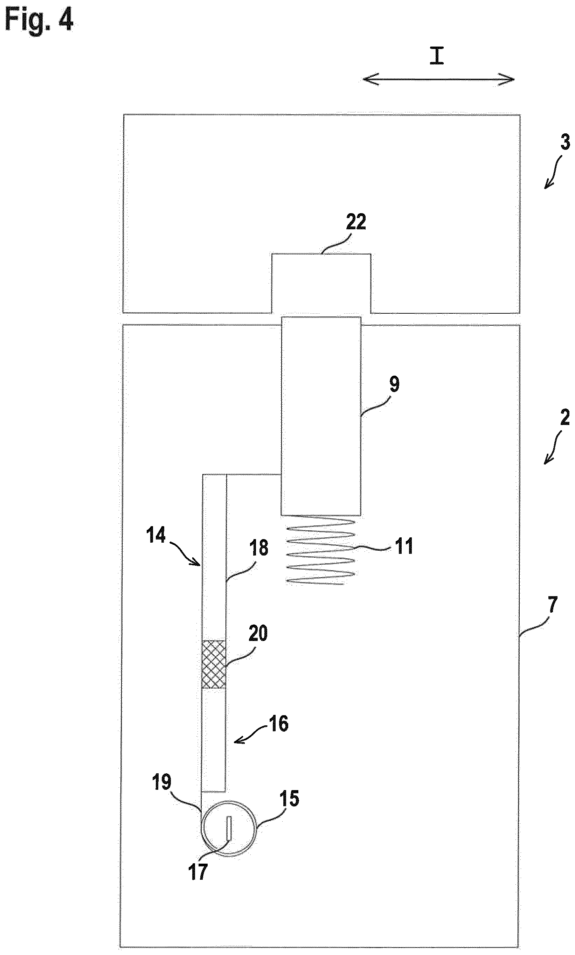

Die Figuren 3 und 4 zeigen ein weiteres Ausführungsbeispiel der erfindungsgemäßen Sicherheitsschalteranordnung 1. Der an einer Schutztür oder dergleichen gelagerte Betätiger 3 kann durch die Bewegung der Schutztür in der mit dem Pfeil I gekennzeichneten Bewegungsrichtung gegenüber dem Sicherheitsschalter 2 bewegt werden. Die Figuren 3 und 4 zeigen den Betätiger 3 in der Verriegelungsstellung.

Als Zuhalteeinheit ist ein Sperrelement 9 in Form eines Zuhaltebolzens vorgesehen, der mittels einer nicht dargestellten Antriebseinheit in Längsrichtung des Sicherheitsschalters 2 verfahren werden kann. Figur 3 zeigt den Zuhaltebolzen bei aktivierter Zuhaltung. Der Zuhaltebolzen befindet sich in seiner Verriegelungsposition und steht über die Stirnseite des Gehäuses 7 des Sicherheitsschalters 2 hervor und ragt in eine Aussparung 22 des Betätigers 3, wodurch dieser in seiner Zuhaltestellung zugehalten ist. Der Zuhaltebolzen wird in der Verriegelungsposition mit der Federkraft einer Feder 11 gehalten. Dem Zuhaltebolzen ist eine Hilfsentriegelungseinheit 14 zugeordnet, deren Aufbau der Hilfsentriegelungseinheit 14 der Figuren 1 und 2 entspricht, das heißt die Hilfsentriegelungseinheit 14 weist ein Betätigungselement 15 und ein Übertragungselement 16 auf, wobei in diesem Fall das freie Ende des Übertragungselements 16 am Zuhaltebolzen befestigt oder in Eingriff bringbar ist.

Figur 3 zeigt den Zustand bei nicht betätigter Hilfsentriegelung.

Figur 4 zeigt die Hilfsentriegelung, die durch Betätigen des Betätigungselements 15 und das Aufwickeln des Filmscharniers 19 auf der Welle bewirkt wird. Dadurch zieht die Hilfsentriegelungseinheit 14 den Zuhaltebolzen gegen die Federkraft der Federeinheit aus der Zuhalteposition zurück, so dass der Zuhaltebolzen in den Sicherheitsschalter 2 eingefahren ist. Damit kann der Betätiger 3 aus seiner Verriegelungsstellung herausbewegt werden.

Das in den Figuren veranschaulichte Prinzip der Hilfsentriegelung kann natürlich auch für andere Bauformen von Sicherheitsschaltern angewendet werden.

### Bezugszeichenliste

- (1): Sicherheitsschalteranordnung
- (2): Sicherheitsschalter
- (3): Betätiger
- (4): Grundkörper
- (5): Verbindungselement
- (6): Betätigerkopf
- (7): Gehäuse
- (8): Öffnung
- (9): Sperrelement
- (10): Wippe
- (11): Feder
- (12): Klappankermagnet
- (13): Schwenkhebel
- (13a): Ausnehmung
- (14): Hilfsentriegelungseinheit
- (15): Betätigungselement
- (16): Übertragungselement
- (17): Schlitz
- (18): Schubstange
- (19): Filmscharnier
- (20): Federelement
- (21): Haken
- (22): Aussparung

- S1, S2: Schwenkachse
- I: Bewegungsrichtung

## Patentansprüche

1. Sicherheitsschalteranordnung (1) mit einem Sicherheitsschalter (2) und einem diesem zugeordneten Betätiger (3), wobei eine Zuhalteeinheit vorgesehen ist, mittels derer der Betätiger (3) in einer Verriegelungsstellung zugehalten ist, wobei der Sicherheitsschalter (2) eine Hilfsentriegelungseinheit (14) aufweist, welche ein mechanisch betätigbares Betätigungselement (15) aufweist, wobei eine Betätigung des Betätigungselements (15) nur mit einem Übertragungselement (16) in eine Stellbewegung für die Zuhalteeinheit umgesetzt ist, **dadurch gekennzeichnet, dass** ein Segment des Übertragungselements (16) eine Schubstange (18) ausbildet und ein Segment des Übertragungselements (16) ein Filmscharnier (19) ausbildet, welches auf einer Welle des Betätigungselements (15) auf- oder abgewickelt werden kann.

2. Sicherheitsschalteranordnung (1) nach Anspruch 1, **dadurch gekennzeichnet, dass** die Zuhalteeinheit ausgebildet ist ein Sperrelement (9) in einer Verriegelungsposition zu halten, wobei mit dem in der Verriegelungsposition gehaltenen Sperrelement (9) der Betätiger (3) in der Verriegelungsstellung zugehalten ist.

3. Sicherheitsschalteranordnung (1) nach Anspruch 2, **dadurch gekennzeichnet, dass** die Zuhalteeinheit eine elektrisch arbeitende Einheit bildet.

4. Sicherheitsschalteranordnung (1) nach einem der Ansprüche 2 oder 3, **dadurch gekennzeichnet, dass** die Zuhalteeinheit Bestandteil des Sicherheitsschalters (2) ist.

5. Sicherheitsschalteranordnung (1) nach einem der Ansprüche 2 bis 4, **dadurch gekennzeichnet, dass** durch das Übertragungselement (16) die Position des Betätigungselements (15) von der Position des Sperrelements (9) entkoppelt ist.

6. Sicherheitsschalteranordnung (1) nach einem der Ansprüche 1 bis 5, **dadurch gekennzeichnet, dass** das Übertragungselement (16) ein Kunststoff-Spritzgussteil ist.

7. Sicherheitsschalteranordnung (1) nach einem der Ansprüche 1 bis 6, **dadurch gekennzeichnet, dass** eine Stirnseite der Welle am Sicherheitsschalter (2) freiliegt und eine Schnittstelle zum Eingriff eines Werkzeugs aufweist, mittels dessen die Welle um ihre Längsachse drehbar ist.

8. Sicherheitsschalteranordnung (1) nach einem der Ansprüche 1 bis 7, **dadurch gekennzeichnet, dass** durch ein Aufwickeln oder Abwickeln des Filmscharniers (19) auf der Welle eine Linearbewegung der Schubstange (18) generiert ist, die auf die Zuhalteeinheit übertragen ist.

9. Sicherheitsschalteranordnung (1) nach einem der Ansprüche 1 bis 8, **dadurch gekennzeichnet, dass** ein Segment des Übertragungselements (16) ein Federelement (20) ist.

10. Sicherheitsschalteranordnung (1) nach einem der Ansprüche 1 bis 9, **dadurch gekennzeichnet, dass** ein Segment des Übertragungselements (16) ein Rastelement ist.

11. Sicherheitsschalteranordnung (1) nach Anspruch 10, **dadurch gekennzeichnet, dass** in einer Endlage der Schubstange (18) des Übertragungselements (16) das Rastelement in einer Rastaufnahme des Sicherheitsschalters (2) eingerastet ist.

12. Sicherheitsschalteranordnung (1) nach einem der Ansprüche 1 bis 11, **dadurch gekennzeichnet, dass** die Verriegelungsstellung des Betätigers (3) dadurch überwacht ist, dass Signale eines Transponders im Betätiger (3) in einer Leseeinheit des Sicherheitsschalters (2) erfasst werden.

## Claims

1. Safety switch assembly (1) comprising a safety switch (2) and an actuator (3) associated therewith, wherein a retaining unit is provided, by means of which the actuator (3) is retained in a locking setting, wherein the safety switch (2) comprises an auxiliary unlocking unit (14) having a mechanically actuable actuating element (15), wherein actuation of the actuating element (15) is converted only by a transmission element (16) into a setting movement for the retaining unit, **characterised in that** a segment of the transmission element (16) forms a pushrod (18) and a segment of the transmission element (16) forms a film hinge (19), which can be wound up on or unwound from a shaft of the actuating element (15).

2. Safety switch assembly (1) according to claim 1, **characterised in that** the retaining element is configured to hold a blocking element (9) in a locking position, wherein the actuator (3) is retained in the locking setting by the blocking element (9) held in the locking position.

3. Safety switch assembly (1) according to claim 2, **characterised in that** the retaining unit forms an electrically operating unit.

4. Safety switch assembly (1) according to one of claims 2 and 3, **characterised in that** the retaining unit is a component of the safety switch (2).

5. Safety switch assembly (1) according to any one of claims 2 to 4, **characterised in that** the position of the actuating element (15) is decoupled from the position of the blocking element (9) by the transmission element (16).

6. Safety switch assembly (1) according to any one of claims 1 to 5, **characterised in that** the transmission element (16) is a plastics material injection-moulded part.

7. Safety switch assembly (1) according to any one of claims 1 to 6, **characterised in that** an end of the shaft is exposed at the safety switch (2) and has an interface for engagement of a tool, by means of which the shaft is rotatable about its longitudinal axis.

8. Safety switch assembly (1) according to any one of claims 1 to 7, **characterised in that** a linear movement, which is transmitted to the retaining unit, of the pushrod (18) is generated by winding up of the film hinge (19) on or unwinding of the film hinge (19) from the shaft.

9. Safety switch assembly (1) according to any one of claims 1 to 8, **characterised in that** a segment of the transmission element (16) is a spring element (20).

10. Safety switch assembly (1) according to any one of claims 1 to 9, **characterised in that** a segment of the transmission element (16) is a detent element.

11. Safety switch assembly (1) according to claim 10, **characterised in that** the detent element is detented in a detent receptacle of the safety switch (2) in an end position of the pushrod (18) of the transmission element (16).

12. Safety switch assembly (1) according to any one of claims 1 to 11, **characterised in that** the locking setting of the actuator (3) is monitored by signals of a transponder in the actuator (3) being detected in a reader unit of the safety switch (2).

## Revendications

1. Ensemble (1) à commutateur de sécurité, comprenant un commutateur de sécurité (2) et un actionneur (3) associé à ce dernier, sachant qu'il est prévu une unité de maintien au moyen de laquelle ledit actionneur (3) est maintenu dans une position de verrouillage, ledit commutateur de sécurité (2) étant muni d'une unité de déverrouillage auxiliaire (14) dotée d'un élément d'actionnement (15) pouvant être manœuvré mécaniquement, sachant qu'une manœuvre dudit élément d'actionnement (15) est convertie, uniquement à l'aide d'un élément de transmission (16), en un mouvement de réglage destiné à l'unité de maintien, **caractérisé par le fait qu'**un segment de l'élément de transmission (16) constitue une tige de poussée (18), et qu'un segment dudit élément de transmission (16) constitue une charnière pelliculaire (19) pouvant être enroulée sur un arbre de l'élément d'actionnement (15), ou en être déroulée.

2. Ensemble (1) à commutateur de sécurité, selon la revendication 1, **caractérisé par le fait que** l'unité de maintien est conçue pour maintenir un élément de blocage (9) en un emplacement verrouillé, l'actionneur (3) étant maintenu dans la position de verrouillage par ledit élément de blocage (9) maintenu audit emplacement verrouillé.

3. Ensemble (1) à commutateur de sécurité, selon la revendication 2, **caractérisé par le fait que** l'unité de maintien forme une unité fonctionnant électriquement.

4. Ensemble (1) à commutateur de sécurité, selon l'une des revendications 2 ou 3, **caractérisé par le fait que** l'unité de maintien fait partie intégrante dudit commutateur de sécurité (2).

5. Ensemble (1) à commutateur de sécurité, selon l'une des revendications 2 à 4, **caractérisé par le fait que** l'emplacement occupé par l'élément d'actionnement (15) est découplé, par l'intermédiaire de l'élément de transmission (16), d'avec l'emplacement occupé par l'élément de blocage (9).

6. Ensemble (1) à commutateur de sécurité, selon l'une des revendications 1 à 5, **caractérisé par le fait que** l'élément de transmission (16) est une pièce en matière plastique moulée par injection.

7. Ensemble (1) à commutateur de sécurité, selon l'une des revendications 1 à 6, **caractérisé par le fait qu'**une face extrême de l'arbre repose librement sur ledit commutateur de sécurité (2), et comporte un interface d'engagement d'un outil au moyen duquel ledit arbre peut être mis en rotation autour de son axe longitudinal.

8. Ensemble (1) à commutateur de sécurité, selon l'une des revendications 1 à 7, **caractérisé par le fait qu'**un enroulement de la charnière pelliculaire (19) sur l'arbre, ou son déroulement d'avec celui-ci, a pour effet d'engendrer un mouvement linéaire de la tige de poussée (18) qui est répercuté sur l'unité de maintien.

9. Ensemble (1) à commutateur de sécurité, selon l'une des revendications 1 à 8, **caractérisé par le fait qu'**un segment de l'élément de transmission (16) est un élément élastique (20).

10. Ensemble (1) à commutateur de sécurité, selon l'une des revendications 1 à 9, **caractérisé par le fait qu'**un segment de l'élément de transmission (16) est un élément encliquetable.

11. Ensemble (1) à commutateur de sécurité, selon la revendication 10, **caractérisé par le fait que**, dans une position extrême de la tige de poussée (18) de l'élément de transmission (16), l'élément encliquetable est cranté dans un logement d'encliquetage dudit commutateur de sécurité (2).

12. Ensemble (1) à commutateur de sécurité, selon l'une des revendications 1 à 11, **caractérisé par le fait que** la position de verrouillage de l'actionneur (3) est surveillée par détection, dans une unité de lecture dudit commutateur de sécurité (2), de signaux d'un transpondeur intégré dans ledit actionneur (3).
